# EUROPEAN PATENT SPECIFICATION

(11) **EP 3 238 652 B1**
(45) Date of publication and mention of the grant of the patent: **12.02.2020**
(21) Application number: 17168316.2
(22) Date of filing: 27.04.2017
(51) Int. Cl.: A61C 1/08, A61B 17/17

(54) **CONTROL GUIDE FOR CHECKING PLACEMENT OF AT LEAST TWO DENTAL ELEMENTS**
STEUERUNGSFÜHRUNG ZUR ÜBERPRÜFUNG DER PLATZIERUNG MINDESTENS ZWEIER DENTALER ELEMENTE
GUIDE DE COMMANDE POUR VÉRIFIER LE PLACEMENT D'AU MOINS DEUX ÉLÉMENTS DENTAIRES

(30) Priority: 29.04.2016 DK 201670278
(43) Date of publication of application: 01.11.2017
(73) Proprietor: 3Shape A/S, 1060 Copenhagen K (DK)
(72) Inventor: NIELSEN, Rasmus, 2300 Copenhagen S (DK); FISKER, Rune, 2830 Virum (DK)
(74) Representative: Guardian IP Consulting I/S

(56) References cited:
- US-A- 5 725 376
- US-A1- 2010 092 910
- US-A1- 2011 060 558
- US-A1- 2014 178 832
- US-A1- 2015 025 855

## Description

### Field of the invention

This invention generally relates to a method for designing a control guide used for controlling the placement of dental elements. In particular the control guide is advantageous when used for checking the position of two or more rotational/non-hexed abutments.

### Background of the invention

For some types of dental elements there exists a risk that they can be placed in incorrect positions and therefore different types of placement guides and devices have been created for correctly placing the dental element. US2015/0025855 A provides an example of virtually designing a drill guide for guiding the surgical drilling of a bore at the planned implant placement site.

However, unless the insertion direction is the same, such placement guides cannot incorporate several dental elements since this would make it impossible to insert the dental elements into respective implants.

This can be a problem, in particular in cases where the dental elements are dependent on correct placement in order to support the same superstructure. For example, where several abutments are to support a bridge it is important that the bridge can be correctly placed on abutments.

Accordingly, in order to ensure correct placement a control guide and the design hereof is disclosed in the following.

### Summary

The invention is defined by claim 1. Disclosed is a computer-implemented method for providing a digital control guide design of a control guide for ensuring the position and orientation of at least two dental elements arranged on at least respective first and second target location, wherein the method comprises
- obtaining a digital 3D representation of at least a part of a patient's jaw comprising at least a first and second target location,
- providing a digital first dental element and a digital second element, respectively being digital 3D representations of a at least a first dental element for placement on the first target location and a second dental element for placement on the second target location,
- arranging the digital first dental element on the digital representation of the first target location and the digital second dental element on the digital representation of the second target location,
- determining contact surfaces of the at least first and second dental element based on an insertion direction of the digital control guide design,
- generating a digital control guide design comprising a digital 3D representation of the gum facing surface of the control guide based on at least a part of the contact surfaces of both the at least first and second dental element.

This provides a control guide design, which when manufactured facilitates positioning and orientation (in general referred to as placement herein) of multiple dental elements.

The control guide designed according to the method disclosed herein facilitates in particular placement of rotatable dental elements, such as specific types of abutments or customized abutments. Abutments are typically placed in implants provided at the respective target site in the patient's mouth. Moreover, the control guide is particularly advantageous for controlling placement of multiple dental elements that have individual and different insertion directions, since the individual unique position of each dental element will function as a reference for the control guide when two or more dental elements are placed.

By basing at least a part of the contact surfaces of both the at least first and second element into the gum facing surface of the control guide a unique placement key is generated that ensures that the control guide is very effective in determining placement of the dental elements. Beside the contact surfaces the gum facing surface may also use surfaces of neighboring teeth and gingiva as a base in order to provide further stability to the control guide.

The digital 3D representation of at least a part of a patient's jaw can be obtained in different ways. It can for example be loaded into the process from a USB key or over a cloud service on the Internet. It can also be obtained directly from a 3D scanner, such as the TRIOS provided by 3Shape TRIOS, where it represents the patient's jaw as a surface representation. However, a voxel representation, e.g. obtained via a CBCT scanner, may also be used.

In a preferred embodiment the digital control guide design is designed so that no conflict occurs between the digital control guide design and the digital 3D representation of the patient's jaw and the at least first and second dental elements arranged thereon. In other words, no conflict occurs when no overlap of neighboring 3D designs or 3D representations occurs when moving the digital control guide design along the insertion direction to an inserted position where the gum facing surface of the control guide design comprising the contacts surfaces aligns (aligning such elements also comprises gum facing surfaces offset from the contact surfaces during designing, where aligning is succeeded when the offset is taken into account) with the contact surfaces of the at least first and second dental elements.

Different tools and instruments can be used when providing digital design. E.g. different Boolean operations can be performed, where 3D models are added or subtracted. For example, the digital dental model can be subtracted from a solid model in order to provide an inverted shape of the dental model or the contact surfaces can be copied and offset in order to provide the gum facing surface of the control guide. During such process the offset surfaces are inverted in order for the software to determine what part of the surface face outwards on a digital model/design.

In one embodiment the contact surfaces are determined by an orthographic projection of the at least digital first and second dental element along the insertion direction. By using orthographic projection to derive the contact surfaces it is avoided that perspective distort the result and scale is maintained.

Preferably the 3D representation of the gum facing surface is based on all of the contact surfaces of the digital first and second dental element in order to provide optimal placement aid, however, only some of the contact surfaces may be used if so desired.

In one embodiment at least one of the digital dental elements represents a screw retained dental element comprising a screw hole and wherein a through going hole is designed in the digital control guide design that extends coaxially with the screw hole represented in the digital dental element. This facilitates attachment of the screw retained dental element as it may be attached to the target site while the control guide is still in place. Of course, the through going hole needs to have a diameter that allows for the passage of the screw so that the control guide can be removed afterwards.

In another aspect disclosed herein there is disclosed a combination of a control guide designed according to the computer-implemented method disclosed herein and a at least one dental element, wherein the dental element comprises an implant screw hole for attaching the dental element to an implant and a superstructure screw for attaching the dental element to a superstructure, such as a restoration or a dental bar.

Such a dental element may in one embodiment be a multi-unit abutment or multi use abutment.

Furthermore in another aspect, there is disclosed a computer program product comprising program code means for allowing a data processing system and user operating such system to perform the method according to any of the above computer implement method claims, when said program code means are executed on the data processing system, and a computer program product, comprising a computer-readable medium having stored there on the program code means.

Disclosed is also a nontransitory computer readable medium storing thereon a computer program product as disclosed, where said computer program product is configured for causing computer-assisted design of a control guide.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1a and 1a shows a control guide designed using the method disclosed herein in a respective pre-placing and post-placing arrangement, and
Fig. 2 shows a schematic view of an embodiment of a system for executing the method disclosed herein.

### Detailed description

In the following description, reference is made to the accompanying figures, which show by way of illustration how the invention may be practiced.

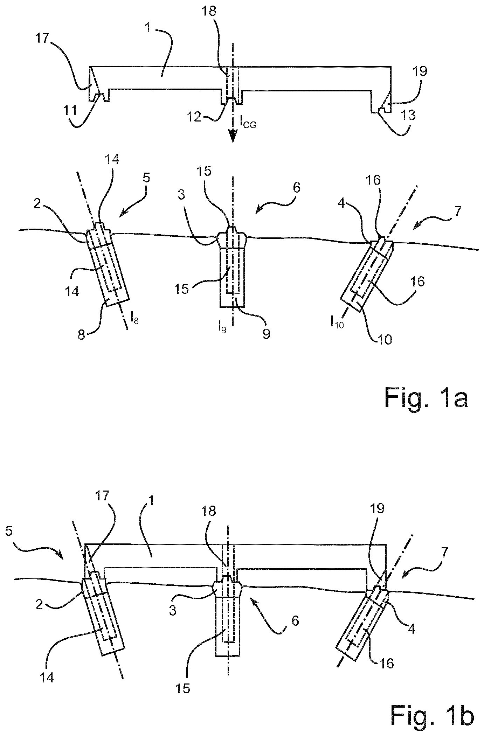

Figure 1 shows a control guide 1 for controlling the placement of three multi-unit abutments 2, 3, 4 placed at respective first, second and third target locations 5, 6, 7 where a first, second and third implant 8, 9, 10 are placed respectively.

The control guide 1 is formed with first, second and third gum facing surfaces 11, 12, 13 which during designing has been derived from respective visible surfaces 14, 15, 16 of the respective abutments when arranged at the target locations and viewed along the insertion direction I_{CG} of the control guide design 1.

As can be seen the first, second and third implant 8, 9, 10 has each been placed with separate oriented implant directions I₈, I₉, I₁₀ respectively. Accordingly, it is not possible to use one single placement guide wherein the abutments are placed, since they need to be placed from different angles. However, by placing the abutments manually in approximate correct position, the control guide can then be placed on top and the placement can be verified as shown in Fig. 1b. If there are slight deviations the control guide itself may guide the abutments into place and with larger deviations it may be necessary to remove the control guide and adjust the abutment where after the control guide can be used again to control the placement. Typically, the correction necessary will be rotational, since the general placement is dictated by the implant and therefore it is for non-hexed abutment (ie. abutments that can rotate in the implant) that the advantage of the control guide as disclosed herein is most distinct.

When correct placement has been determined as shown in Fig. 1b, the abutments 2, 3, 4 can be secured to the implant via implant screws (not shown) inserted in screw bores 14, 15, 16. In order to gain access to the screw bores while the control guide 1 is placed on the abutment there are provided through going holes 17, 18, 19 in the control guide, which align with the respective screw bores.

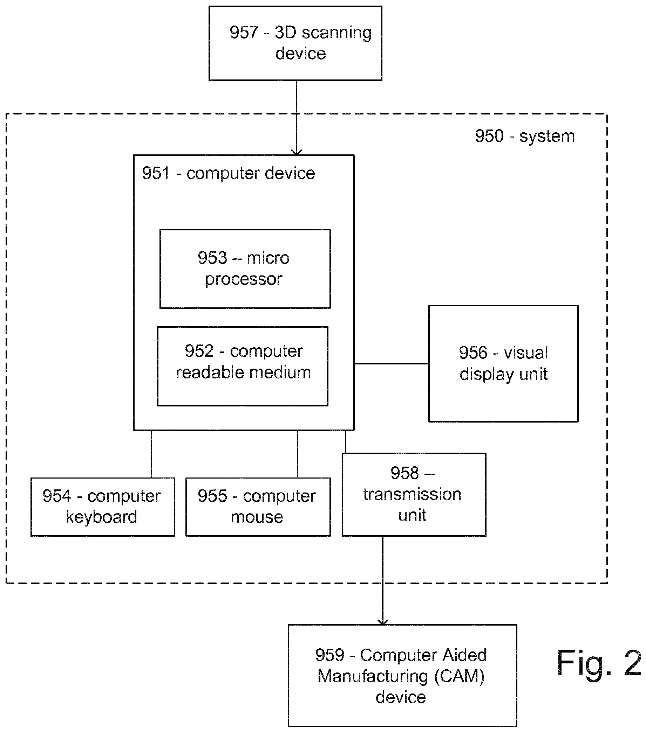

Fig. 2 shows a schematic of a system according to an embodiment of the present invention. The system 950 comprises a computer device 951 comprising a computer readable medium 952 and a processor 953. The system further comprises a visual display unit 956, a computer keyboard 954 and a computer mouse 955 for entering data and activating virtual buttons visualized on the visual display unit 956. The visual display unit 956 can be a computer screen. The computer device 951 is capable of receiving a digital 3D representation of the patient's jaw from a scanning device 957, such as the TRIOS intra-oral scanner manufactured by 3shape TRIOS, or capable of receiving scan data from such a scanning device and forming a digital 3D representation of the patient's jaw based on such scan data. The received or formed digital 3D representation can be stored in the computer readable medium 952 and provided to the processor 953. The processor 953 is configured for performing the steps of the method according to any of the embodiments disclosed.

The system comprises a unit 958 for transmitting the digital control guide design to e.g. a computer aided manufacturing (CAM) device 959 for manufacturing the control guide or to another computer system e.g. located at a milling center where the control guide is manufactured. The unit for transmitting the virtual 3D model can be a wired or a wireless connection.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

A claim may refer to any of the preceding claims, and "any" is understood to mean "any one or more" of the preceding claims.

It should be emphasized that the term "comprises/comprising" when used in this specification is taken to specify the presence of stated features, integers, steps or components but does not preclude the presence or addition of one or more other features, integers, steps, components or groups thereof.

The features of the method described above and in the following may be implemented in software and carried out on a data processing system or other processing means caused by the execution of computer-executable instructions. The instructions may be program code means loaded in a memory, such as a RAM, from a storage medium or from another computer via a computer network. Alternatively, the described features may be implemented by hardwired circuitry instead of software or in combination with software.

## Claims

1. A computer-implemented method for providing a digital control guide design of a control guide (1) for ensuring the position and orientation of at least two dental abutments (2,3,4) arranged on at least respective first and second target location (5,6,7), wherein the method comprises
- obtaining a digital 3D representation of at least a part of a patient's jaw comprising at least a first and second target location (5,6,7),
- providing a digital first dental abutment and a digital second abutment, respectively being digital 3D representations of a at least a first dental abutment (2) for placement on the first target location (5) and a second dental abutment (3) for placement on the second target location (6),
- arranging the digital first dental abutment on the digital representation of the first target location and the digital second dental abutment on the digital representation of the second target location,
- determining contact surfaces of the at least first and second dental abutment based on an insertion direction of the digital control guide design by deriving visible surfaces (14,15,16) of the respective abutments (2,3,4) when arranged at the target locations (5,6,7) and viewed along the insertion direction (ICG) of the digital control guide design,
- generating a digital control guide design comprising a digital 3D representation of the gum facing surface of the control guide based on at least a part of the contact surfaces of both the at least first and second dental abutment.

2. A computer-implemented method according to claim 1, wherein the contact surfaces are determined by an orthographic projection of the at least digital first and second dental abutment along the insertion direction.

3. A computer-implement method according to claim 1 or 2, wherein the 3D representation of the gum facing surface is based on all of the contact surfaces of the digital first and second dental abutment.

4. A computer-implemented method for providing a digital control guide design of a control guide according to claim 1, 2 or 3, wherein at least one of the digital dental abutments represents a screw retained dental abutment comprising a screw hole and wherein a through going hole is designed in the digital control guide design that extends coaxially with the screw hole represented in the digital dental abutment.

## Patentansprüche

1. Computerimplementiertes Verfahren zum Bereitstellen einer digitalen Steuerungsführungsgestaltung einer Steuerungsführung (1) zum Sicherstellen der Position und Ausrichtung mindestens zweier dentaler Abutments (2,3,4), die an mindestens einer jeweiligen ersten und zweiten Zielstelle (5,6,7) angeordnet sind, wobei das Verfahren umfasst
- Erhalten einer digitalen 3D-Darstellung mindestens eines Teils eines Kiefers eines Patienten, umfassend mindestens eine erste und eine zweite Zielstelle (5,6,7),
- Bereitstellen eines digitalen ersten dentalen Abutments und eines digitalen zweiten Abutments, die jeweils digitale 3D-Darstellungen von mindestens einem ersten dentalen Abutment (2) zur Platzierung an der ersten Zielstelle (5) und einem zweiten dentalen Abutment (3) zur Platzierung an der zweiten Zielstelle sind,
- Anordnen des digitalen ersten dentalen Abutments an der digitalen Darstellung der ersten Zielstelle und des digitalen zweiten dentalen Abutments an der digitalen Darstellung der zweiten Zielstelle,
- Ermitteln von Kontaktflächen des mindestens ersten und zweiten dentalen Abutments, basierend auf einer Einschubrichtung der digitalen Steuerungsführungsgestaltung, durch Ableiten sichtbarer Flächen (14,15,16) der jeweiligen Abutments (2,3,4), wenn bei den Zielstellen (5,6,7) angeordnet und entlang der Einschubrichtung (ICG) der digitalen Steuerungsführungsgestaltung betrachtet,
- Erzeugen einer digitalen Steuerungsführungsgestaltung, umfassend eine digitale 3D-Darstellung der dem Gaumen zugewandten Fläche der Steuerungsführung, basierend auf mindestens einem Teil der Kontaktflächen von sowohl dem mindestens ersten als auch zweiten dentalen Abutment.

2. Computerimplementiertes Verfahren nach Anspruch 1, wobei die Kontaktflächen durch einen orthografischen Fortsatz des mindestens digitalen ersten als auch zweiten dentalen Abutments entlang der Einschubrichtung ermittelt sind.

3. Computerimplementiertes Verfahren nach Anspruch 1 oder 2, wobei die 3D-Darstellung der dem Gaumen zugewandten Fläche auf allen der Kontaktflächen des digitalen ersten und zweiten dentalen Abutments basiert.

4. Computerimplementiertes Verfahren zum Bereitstellen einer digitalen Steuerungsführungsgestaltung einer Steuerungsführung nach Anspruch 1, 2 oder 3, wobei mindestens eines der digitalen dentalen Abutments ein schraubenbefestigtes dentales Abutment darstellt, das ein Schraubloch umfasst, und wobei ein durchgehendes Loch in der digitalen Steuerungsführungsgestaltung gestaltet ist, das sich koaxial mit dem Schraubloch erstreckt, das im digitalen dentalen Abutment dargestellt ist.

## Revendications

1. Procédé mis en œuvre par ordinateur pour fournir une conception de guide de commande numérique d'un guide de commande (1) pour assurer la position et l'orientation d'au moins deux piliers dentaires (2, 3, 4) agencés sur au moins des premier et second emplacements cibles respectifs (5, 6, 7), dans lequel le procédé comprend les étapes consistant à
- obtenir une représentation numérique 3D d'au moins une partie d'une mâchoire de patient comprenant au moins des premier et second emplacements cibles (5, 6, 7),
- fournir un premier pilier dentaire numérique et un second pilier numérique, qui sont respectivement des représentations numériques 3D d'au moins un premier pilier dentaire (2) pour une mise en place sur le premier emplacement cible (5) et d'un second pilier dentaire (3) pour une mise en place sur le second emplacement cible (6),
- agencer le premier pilier dentaire numérique sur la représentation numérique du premier emplacement cible et le second pilier dentaire numérique sur la représentation numérique du second emplacement cible,
- déterminer des surfaces de contact des au moins premier et second piliers dentaires sur la base d'une direction d'insertion de la conception de guide de commande numérique en dérivant des surfaces visibles (14, 15, 16) des piliers respectifs (2, 3, 4) lorsqu'ils sont agencés au niveau des emplacements cibles (5, 6, 7) et vus le long de la direction d'insertion (ICG) de la conception de guide de commande numérique,
- générer une conception de guide de commande numérique comprenant une représentation numérique 3D de la surface faisant face à la gencive du guide de commande sur la base d'au moins une partie des surfaces de contact à la fois des au moins premier et second piliers dentaires.

2. Procédé mis en œuvre par ordinateur selon la revendication 1, dans lequel les surfaces de contact sont déterminées par une projection orthographique des au moins premier et second piliers dentaires numériques le long de la direction d'insertion.

3. Procédé mis en œuvre par ordinateur selon la revendication 1 ou 2, dans lequel la représentation 3D de la surface faisant face à la gencive est basée sur toutes les surfaces de contact des premier et second piliers dentaires numériques.

4. Procédé mis en œuvre par ordinateur pour fournir une conception de guide de commande numérique d'un guide de commande selon la revendication 1, 2 ou 3, dans lequel au moins l'un des piliers dentaires numériques représente un pilier dentaire retenu par vis comprenant un trou de vis et dans lequel un trou traversant est conçu dans la conception de guide de commande numérique qui s'étend coaxialement avec le trou de vis représenté dans le pilier dentaire numérique.
